# EUROPÄISCHE PATENTANMELDUNG

(11) **EP 0 768 653 A1**
(43) Veröffentlichungstag der Anmeldung: **16.04.1997**
(21) Anmeldenummer: 96115330.1
(22) Anmeldetag: 25.09.1996
(51) Int. Cl.: G11B 7/26, G11B 7/085, G11B 7/125, G11B 7/12

(54) **Vorrichtung zum Belichten eines kreisscheibenförmigen Substrates**

(30) Priorität: 09.10.1995 DE 19537406
(71) Anmelder: Balzers und Leybold Deutschland Holding Aktiengesellschaft, 63450 Hanau (DE)
(72) Erfinder: Koop, Hermann, Dr., 30952 Ronnenberg (DE); Hensel, Bernd, 65760 Eschborn (DE); Hofmann, Friedrich, 63564 Büdingen (DE); Kaiser, Paul, 81539 München (DE); Süss, Ralf, 81927 München (DE)
(74) Vertreter: Schlagwein, Udo, Dipl.-Ing.

(57) **Zusammenfassung**

Bei einer Vorrichtung zum Belichten eines kreisscheibenförmigen Substrates mittels eines von einem Laser erzeugten Laserstrahls wird der Laserstrahl zur Schreibsignalmodulation und Schreibintensitätsveränderung mittels eines Modulators moduliert. Eine erforderliche wobble groo-auf dem Substrat wird dadurch erzeugt, daß der Modulator zusätzlich zu seiner Funktion der Modulation des Schreibsignals und der Schreibintensität zum seitlichen Auslenken des Laserstrahls aufgrund elektrischer Signale ausgebildet ist.

## Beschreibung

Die Erfindung betrifft eine Vorrichtung zum Belichten eines kreisscheibenförmigen Substrates mittels eines von einem Laser erzeugten Laserstrahls, bei der der Laserstrahl zur Schreibsignalmodulation und Schreibintensitätsveränderung mittels eines Modulators moduliert wird und welche Mittel zur seitlichen Auslenkung des Laserstrahls hat.

Bei solchen Substraten werden die Pits auf einer spiralförmigen Schreibspur placiert. Diese Schreibspur muß nicht nur die für den Benutzer wichtige Information, sondern auch Steuerdaten für das Wiedergabegerät enthalten. Hierzu wird die Schreibspur als sogenannte wobble groove ausgebildet. Dabei schwingt der Belichtungsfleck des Laserstrahls mit einer Frequenz von bis zu 30 kHz seitlich zur Schreibspur. Diese für das Nachführen des Objektivs am Recorder zum Zwecke des Haltens der Schreibspur und für die Drehzahlsteuerung des Informationsträgers auf dem Recorder erforderliche seitliche Auslenkung des Belichtungsflecks erzeugt man bislang bei der Herstellung solcher kreisscheibenförmiger Substrate durch zyklisches seitliches Auslenken des Laserstrahls mittels eines Deflektors. Hierzu wird der Deflektor mechanisch angetrieben, was einen sehr großen mechanisch-elektrooptischen Aufwand erfordert. Dennoch läßt sich mit solchen mechanischen Einrichtungen keine ausreichend große Genauigkeit erreichen. Auftretende Unregelmäßigkeiten der Bewegung fuhren in der Praxis zu einer schlechten Qualität der erzeugten Produkte oder sogar zu Ausschuß. Verstärkt werden diese nachteiligen Effekte dadurch, daß der mechanische Antrieb des Deflektors relativ rasch verschleißt, so daß sich Ungenauigkeiten vergrößern.

Der Erfindung liegt das Problem zugrunde, eine Vorrichtung der eingangs genannten Art so auszubilden, daß eine seitliche Auslenkung des Laserstrahls mit besonders hoher Genauigkeit und verschleißarm erfolgen kann.

Dieses Problem wird erfindungsgemäß dadurch gelöst, daß der Modulator zusätzlich zu seiner Funktion der Modulation des Schreibsignals und Schreibintensität zur Erzeugung einer wobble groove durch seitliches Auslenken des Laserstrahls aufgrund elektrischer Signale ausgebildet ist.

Durch diese Gestaltung wird ein ohnehin erforderliches Bauteil, nämlich der Modulator, zur Erfüllung einer zusätzlichen Funktion benutzt, zu der bisher ein mechanisch angetriebener, ungenau arbeitender, verschleiß- und störanfälliger Deflektor notwendig war. Zur Verwirklichung der Erfindung sind weniger optische Komponenten als beim Stand der Technik erforderlich. Deshalb verringern sich auch die Lichtintensitätsverluste. Dank der Erfindung ist die Vorrichtung insgesamt kostengünstiger herzustellen als die bisher bekannten, vergleichbaren Vorrichtungen.

Gemäß einer vorteilhaften Weiterbildung der Erfindung kann der Modulator zusätzlich zu weiteren Funktionen genutzt werden, nämlich dann, wenn der Modulator zur radialen Feinkorrektur des Laserstrahls und zur Rauschunterdrückung ausgebildet ist.

Für andere Zwecke gebräuchliche Modulatoren können für die Erfindung eingesetzt werden, wenn gemäß einer vorteilhaften Ausgestaltung der Erfindung der Modulator ein akusto-optischer Modulator ist, welcher durch Beugung an einem Kristallgitter Licht in den abbildenden Strahlengang einkoppelt und durch Verändern des Wirkungsgrades der Beugung die einzukoppelnde Lichtleistung steuert, so daß durch Variation der Gitteransteuerfrequenz die Richtung des Lichtes veränderbar ist.

## Patentansprüche

1. Vorrichtung zum Belichten eines kreisscheibenförmigen Substrates mittels eines von einem Laser erzeugten Laserstrahls, bei der der Laserstrahl zur Schreibsignalmodulation und Schreibintensitätsveränderung mittels eines Modulators moduliert wird und welche Mittel zur seitlichen Auslenkung des Laserstrahls hat, **dadurch gekennzeichnet,** daß der Modulator zusätzlich zu seiner Funktion der Modulation des Schreibsignals und der Schreibintensität zur Erzeugung einer wobble groove durch seitliches Auslenken des Laserstrahls aufgrund elektrischer Signale ausgebildet ist.

2. Vorrichtung nach Anspruch 1, **dadurch gekennzeichnet,** daß der Modulator zusätzlich zur radialen Feinkorrektur des Laserstrahls und zur Rauschunterdrückung ausgebildet ist.

3. Vorrichtung nach den Ansprüchen 1 oder 2, **dadurch gekennzeichnet,** daß der Modulator ein akusto-optischer Modulator ist, welcher durch Beugung an einem Kristallgitter Licht in den abbildenden Strahlengang einkoppelt und durch Verändern des Wirkungsgrades der Beugung die einzukoppelnde Lichtleistung steuert, so daß durch Variation der Gitteransteuerfrequenz die Richtung des Lichtes veränderbar ist.
